(19) Europäisches Patentamt
European Patent Office
Office européen des brevets

(11) **EP 1 289 164 B1**

(12) **EUROPÄISCHE PATENTSCHRIFT**

(45) Veröffentlichungstag und Bekanntmachung des Hinweises auf die Patenterteilung:
**27.09.2006 Patentblatt 2006/39**

(51) Int Cl.:
***H04B 3/54*** (2006.01)

(21) Anmeldenummer: **02016072.7**

(22) Anmeldetag: **19.07.2002**

(54) **Versorgungsleitungsstruktur zur Übertragung von Informationen zwischen Kraftfahrzeugkomponenten**

Power line structure for communicating informations between vehicle components

Structure de ligne électrique pour la communication d'informations entre des composants d'un véhicule

(84) Benannte Vertragsstaaten:
**DE ES FR IT SE**

(30) Priorität: **31.08.2001 DE 10142409**

(43) Veröffentlichungstag der Anmeldung:
**05.03.2003 Patentblatt 2003/10**

(73) Patentinhaber: **ROBERT BOSCH GMBH**
**70442 Stuttgart (DE)**

(72) Erfinder:
• **Enders, Thorsten**
**71665 Vaihingen (DE)**
• **Hugel, Robert**
**76199 Karlsruhe (DE)**
• **Schirmer, Juergen**
**69124 Heidelberg (DE)**
• **Stiegler, Frank**
**76168 Karlsruhe (DE)**
• **Dostert, Klaus**
**67706 Krickenbach (DE)**
• **Kuehn, Timo**
**76470 Oetigheim (DE)**

(56) Entgegenhaltungen:
EP-A- 0 656 696          WO-A-99/00907
DE-A- 10 012 862         US-A- 5 745 027

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 289 164 B1

**Beschreibung**

Die vorliegende Erfindung betrifft eine Versorgungsleitungsstruktur zur Energieversorgung von elektrischen Komponenten eines Kraftfahrzeugs und zur Übertragung von Informationen zwischen zumindest einem Teil der Komponenten. Die Versorgungsleitungsstruktur weist gesonderte, von der Fahrzeugkarosserie elektrisch getrennte Versorgungsleitungen als Rückleitungen von den Komponenten zu mindestens einer Energiequelle des Kraftfahrzeugs auf.

Stand der Technik

In einem Kraftfahrzeug findet nach dem Stand der Technik die Kommunikation zwischen verschiedenen elektrischen Komponenten, wie bspw. Türsteuergerät und Sitzsteuergerät, in der Regel mittels eines Bussystems (z.B. Controller Area Network, CAN) statt. Darüber hinaus sind zur Zeit neue Buskonzepte in der Entwicklung, bei denen die Kommunikation zwischen den elektrischen Komponenten über eine Versorgungsleitungsstruktur erfolgen soll, die zur Energieversorgung der elektrischen Komponenten in dem Kraftfahrzeug vorgesehen ist. Dieses neue Buskonzept wird auch als Powerline Communications bezeichnet. Die Powerline Communications kann mit den heute in Kraftfahrzeugen vorhandenen Versorgungsleitungsstrukturen nur eingeschränkt betrieben werden, da die über die Versorgungsleitungen zu übertragenden Informationen auf Grund von Störungen und Reflexionen stark gedämpft bei der empfangenden Komponente ankommen bzw. sogar gar nicht mehr von Stör- oder Rauschsignalen unterschieden werden können.

Aus der WO 92/21180 ist eine Versorgungsleitungsstruktur für Powerline Communications bekannt. In dieser Druckschrift wird ganz allgemein die Funktionsweise der Powerline Communications erläutert und werden Lösungen für verschiedene Probleme angesprochen, die bei der Realisierung der Powerline Communications auftreten können. Auf diese Druckschrift wird hinsichtlich des Aufbaus einer Versorgungsleitungsstruktur für die Powerline Communications und hinsichtlich der Funktionsweise der Powerline Communications ausdrücklich Bezug genommen.

Darüber hinaus ist aus der DE 197 03 144 C2 ein Verfahren zur Übertragung von Informationen in einem Kraftfahrzeug über eine Versorgungsleitungsstruktur bekannt. Die dort beschriebene Powerline Communications ist auf den Einsatz für elektrische Komponenten einer Rückfahrhilfe eines Kraftfahrzeugs beschränkt. Für die Powerline Communications wird die in dem Kraftfahrzeug bereits vorhandene Versorgungsleitungsstruktur ohne besondere Veränderungen oder Anpassungen an die Informationsübertragung verwendet.

Aus der WO 00/00907 ist eine Versorgungsleitungsstruktur zur Energieversorgung von elektrischen Komponenten eines Kraftfahrzeugs und zur Übertragung von Informationen zwischen den Komponenten bekannt. Allerdings wird in dieser Druckschrift zur Realisierung der Informationsübertragung auf eine herkömmliche Versorgungsleitungsstruktur zurückgegriffen, bei der die Karosserie als allgemeine elektrische Masse dient. Dies führt zu verschiedenen unerwünschten Effekten im hochfrequenten Bereich, wie bspw. Funkabstahlung und Übersprechen. Genau diese Nachteile sollen mit der vorliegenden Erfindung jedoch vermieden werden.

Das gleiche gilt auch für die US 5,745,027, wo in den Figuren zwar eine Versorgungsleitungsstruktur mit zwei separaten Versorgungsleitungen dargestellt ist, wobei jedoch eine der Versorgungsleitungen mit der Karosserie des Kraftfahrzeugs in Verbindung steht, die als allgemeine elektrische Masse verwendet wird. Auch die in dieser Druckschrift beschriebene Versorgungsleitungsstruktur weist somit keine von der Fahrzeugkarosserie elektrisch getrennte Versorgungsleitungen auf und führt zu den unerwünschten Effekten im hochfrequenten Bereich.

Der vorliegenden Erfindung liegt die Aufgabe zu Grunde, eine Versorgungsleitungsstruktur eines Kraftfahrzeugs derart auszugestalten, dass eine möglichst ungestörte Übertragung von Informationen zwischen elektrischen Komponenten, die von der Versorgungsleitungsstruktur mit Energie versorgt werden, zu gewährleisten. Insbesondere soll die Störanfälligkeit bei einer Powerline Communications verringert werden. Gleichzeitig soll die Energieversorgung der elektrischen Komponenten über die Versorgungsleitungsstruktur weiterhin gewährleistet sein.

Zur Lösung dieser Aufgabe schlägt die vorliegende Erfindung ausgehend von der Versorgungsleitungsstruktur der eingangs genannten Art vor, dass

-    Sende-/ Empfangseinheiten in den Komponenten vorgesehen sind, wobei die Impedanz der Sende-/ Empfangseinheiten der Komponenten an den Wellenwiderstand der jeweils an die Komponente heranführenden Versorgungsleitungen angepasst ist;
-    alle Komponenten von der Versorgungsleitungsstruktur hochfrequent entkoppelt sind; und
-    in den Verbindungsleitungen Hochfrequenz-Drosseln seriell angeordnet sind und zu den Komponenten hin in den Verbindungsleitungen mindestens ein Kondensator parallel geschaltet ist.

Vorteile der Erfindung

Durch die vorgeschlagenen Maßnahmen kann ein entscheidender Schritt in Richtung einer Verbesserung der Störfestigkeit bei einer Powerline Communications in einem Kraftfahrzeug erzielt werden. Es ist erkannt worden, dass die Gestaltung der "Rückleitung" einen wichtigen Gesichtspunkt hinsichtlich der Störanfälligkeit der Versorgungsleitungsstruktur darstellt. Bisher wird die Karosserie eines Kraftfahrzeugs als allgemeine elektrische Masse verwendet, was verschiedene unerwünschte Effekte im hochfrequenten Bereich, wie Funkabstrahlung und Übersprechen, mit sich bringt. Für die zuverlässige Übertragung hochfrequenter Informationssignale (geträgerte Übertragung mit hochfrequenten Trägern) bei der Powerline Communications ist das Verwenden einer Karosseriemasse deshalb nicht mehr geeignet.

Bei der Powerline Communications erfolgt die Übertragung von Informationen innerhalb eines Kraftfahrzeugs nicht mehr über separat zu verlegende Datenleitungen, sondern vielmehr über die in dem Kraftfahrzeug zur Energieversorgung der Komponenten sowieso verlegten Versorgungsleitungen. Diese werden also neben der Energieversorgung auch zur Übertragung von Informationen zwischen den Komponenten genutzt. Dadurch können separate Datenleitungen, wie sie bspw. bei einem Controller Area Network (CAN)-Bus benötigt werden, eingespart werden. Das hat im Wesentlichen die folgenden Vorteile:

- Kostenersparnis: Neben den Materialkosten für die Datenleitungen werden auch die Kosten für die Verlegung der Datenleitungen eingespart.

- Gewichtsreduktion: Durch den Wegfall der Datenleitungen reduziert sich das Gesamtgewicht des Kraftfahrzeugs.

- Geringe Fehleranfälligkeit durch Leitungsdefekte: Durch Reduktion der Leitungsanzahl in kritischen Bereichen mit erhöhter mechanischer Belastung der Leitungen, z.B. im Bereich beweglicher Fahrzeugteile wie Türen, ergibt sich insgesamt eine geringere Fehleranfälligkeit gegenüber Leitungsdefekten. Des weiteren ist die Versorgungsleitungsstruktur, insbesondere zur Energieversorgung von Komponenten aus sicherheitsrelevanten Bereichen des Kraftfahrzeugs, bereits so ausfallsicher ausgebildet, dass eine Unterbrechung der Energieversorgung für diese Komponenten nahezu ausgeschlossen ist. Ein Ausfall der Energieversorgung für eine sicherheitsrelevante Komponente würde die Sicherheit des Kraftfahrzeugs gefährden und muss deshalb unbedingt durch geeignete Sicherheitsmaßnahmen vermieden werden.

- Vereinheitlichung bestehender Buskonzepte: Durch die Datenübertragung auf der Versorgungsleitungsstruktur wird ein einheitliches Übertragungskonzept für alle Kommunikationsanwendungen innerhalb des Kraftfahrzeugs ermöglicht.

- Leichte Nachrüstbarkeit: Aufgrund des generell in einem Kraftfahrzeug bereits vorliegenden Versorgungsnetzes, an das mit Energie zu versorgende Komponenten und Systeme angeschlossen sind, liegt ein im Rahmen von Powerline Communications an jeder dieser Komponenten zugängliches Kommunikationsnetz vor.

Die Informationen können mittels Mehrfach-Zugriffsverfahren, insbesondere mittels des TCMA (Time Division Multiple Access)-, FDMA (Frequency Division Multiple Access)-, oder CDMA (Code Division Multiple Access)-Verfahrens, übertragen werden. Bei diesen Verfahren werden die einzelnen Komponenten entweder im Zeit- bzw. Frequenzbereich oder durch Verwendung verschiedener (orthogonaler) Codes separiert.

Es wird vorgeschlagen, dass

- alle Komponenten von der Versorgungsleitungsstruktur hochfrequent entkoppelt sind; und
- Sende-/Empfangseinheiten in den Komponenten vorgesehen sind, wobei die Impedanz der Sende-/ Empfangseinheiten der Komponenten an den Wellenwiderstand der jeweils an die Komponente heranführenden Versorgungsleitungen angepasst ist.

Reflexionen, die auf den Versorgungsleitungen durch Sprünge des Wellenwiderstandes (Stoßstellen) oder Fehlanpassung an den Leitungsenden entstehen, sind für eine schnelle Datenübertragung sehr störend, da durch sie eine lange Kanalimpulsantwort entsteht. Aus diesem Grund wird jede Fahrzeugkomponente nach Möglichkeit hochfrequenzmäßig von der Versorgungs- und Datenleitung abgekoppelt. Durch diese Maßnahmen können die Kanaleigenschaften der Informationsübertragung entscheidend verbessert werden. Insbesondere wird ein nahezu konstanter Dämpfungsverlauf und eine betragsmäßige Reduzierung der Reflexionen in der Versorgungsleitungsstruktur erzielt. Dadurch wird die Informationsübertragung vorhersehbar und berechenbar.

In den Verbindungsleitungen sind Hochfrequenz-Drosseln seriell angeordnet und ist zu den Komponenten hin in den Verbindungsleitungen mindestens ein Kondensator parallel geschaltet. Dadurch können die elektrischen Komponenten besonders effektiv hochfrequent entkoppelt werden. Hohe Frequenzen werden am Eindringen in die Komponenten gehindert. Der parallel geschaltete Kondensator bewirkt einen hochfrequenten Kurzschluss.

Gemäß einer vorteilhaften Weiterbildung der vorliegenden Erfindung wird vorgeschlagen, dass die Versorgungsleitungen der Versorgungsleitungsstruktur als Koaxialleitungen oder als verdrillte Doppeladern (Twisted-Pair-Leitungen) ausgebildet sind. Koaxialleitungen zeichnen sich durch ihre gute Abschirmwirkung aus. Der Energietransport - egal bei welcher Frequenz - findet im Inneren der Struktur statt, so dass keine elektromagnetischen Felder austreten. Der Querschnitt der Koaxialleitungen muss ausreichend groß sein, um Ströme von über 25 A transportieren zu können. Eine sehr attraktive Alternative zur Koaxialstruktur stellt die Verwendung verdrillter Doppeladern dar.

Gemäß einer bevorzugten Ausführungsform der vorliegenden Erfindung ist zwischen die Komponenten und die Versorgungsleitungsstruktur eine Anpassschaltung eingefügt, durch welche die Impedanz der Sende-/ Empfangseinheiten der Komponenten an den Wellenwiderstand der jeweils an die Komponente heranführenden Versorgungsleitungen angepasst ist. Die Impedanz der Sende- /Empfangseinheiten wird an den Wellenwiderstand der Versorgungsleitung angepasst. Dies geschieht mittels einer speziellen Anpassschaltung, die aus zwei Spulen und mehreren Ferritperlen besteht, die in den Versorgungsleitungen jeweils angeordnet bzw. konzentrisch auf die Versorgungsleitungen geschoben sind.

Schließlich wird vorgeschlagen, dass die Versorgungsleitungen in einer H-Struktur, einer Ring-Struktur oder einer Stern-Struktur angeordnet sind. Bei der H-Struktur ist der Querschnitt des Hauptstrangs an die zu übertragende Leistung angepasst. Dies bedeutet, dass der Querschnitt beginnend bei einer Energiequelle am größten ist und sich entsprechend der Anzahl der noch zu versorgenden Komponenten mit wachsender Länge verringert. Dies würde eine zusätzliche Einsparung an Leitermaterial mit sich bringen. Bei der Ringstruktur kann der Leiterquerschnitt wie bei der H-Struktur entsprechend der zu transportierenden Leistung variabel gestaltet werden. Hierbei ist es im Hinblick auf das Hochfrequenzverhalten wichtig, durch Gestaltung der Leitergeometrie trotz Querschnittsveränderung den Wellenwiderstand konstant zu halten. Insgesamt wird die effektive Leitungslänge um etwa den Faktor 2 höher liegen als bei der H-Struktur. Bei der Stern-Struktur weist der Hauptstrang einen konstanten Querschnitt auf. Die einzelnen Versorgungsleitungszweige sind nach dem jeweiligen Energiebedarf der angeschlossenen Komponenten bemessen.

Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Es zeigen:

Figur 1    eine erfindungsgemäße Versorgungsleitungsstruktur gemäß einer bevorzugten Ausführungsform;

Figur 2    eine Sende-/Empfangseinheit einer elektrischen Kraftfahrzeugkomponente, die an die Versorgungsleitungsstruktur aus Figur 2 angeschlossen ist; und

Figur 3    eine Anpassschaltung, die zwischen einen Versorgungsleitungszweig und an die Versorgungsleitungsstruktur angeschlossene elektrische Komponente angeordnet ist.

Beschreibung der Ausführungsbeispiele

Die vorliegende Erfindung schlägt verschiedene Maßnahmen vor, mit denen die Eigenschaften einer Versorgungsleitungsstruktur zur Übertragung von Informationen zwischen elektrischen Komponenten eines Kraftfahrzeugs, die an die Versorgungsleitungsstruktur angeschlossen sind, verbessert werden können. Insbesondere kann durch eine geeigneten Aufbau der Vorsorgungsleitungsstruktur die Störanfälligkeit der Informationsübertragung verringert werden. Außerdem können durch ein Hochfrequenz (HF)-Konditionierung die Kanaleigenschaften der Informationsübertragung verbessert werden. Dies wird bspw. dadurch erreicht, dass der Dämpfungsverlauf nahezu konstant ist und dass die Reflexionen betragsmäßig reduziert werden.

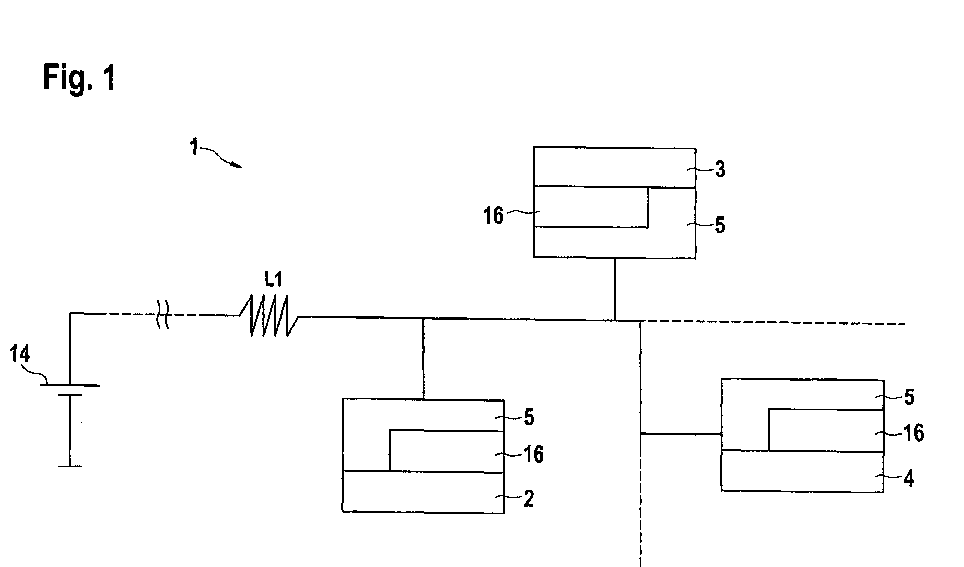

In Figur 1 ist eine Versorgungsleitungsstruktur in Ihrer Gesamtheit mit dem Bezugszeichen 1 bezeichnet. Die Versorgungsleitungsstruktur 1 ist eigentlich zur Energieversorgung von elektrischen Kraftfahrzeugkomponenten 2, 3, 4 vorgesehen. Als elektrische Komponenten 2, 3, 4 im Sinne der vorliegenden Erfindung werden auch hydraulische oder pneumatische Komponenten bezeichnet, die elektrisch ansteuerbar sind und über die Versorgungsleitungsstruktur 1 mit Energie versorgt werden. Elektrische Komponenten 2, 3, 4 sind bspw. Kraftfahrzeugsteuergeräte, die in großer Anzahl in einem Kraftfahrzeug modernerer Bauart vorhanden sind und untereinander Informationen austauschen müssen.

An die Versorgungsleitungsstruktur 1 sind in Figur 1 drei Komponenten 2, 3, 4 angeschlossen. Es ist jedoch ohne weiteres denkbar noch weitere Komponenten an die Versorgungsleitungsstruktur 1 anzuschließen, was durch die gestrichelten Linien veranschaulicht ist. In jeder Komponente 2, 3, 4 ist eine Sende-/Empfangseinheit (Transceiver) 5 vorgesehen, um Informationen von der Komponente 2, 3, 4 über die Versorgungsleitungsstruktur 1 zu übertragen bzw. um Informationen von der Versorgungsleitungsstruktur 1 zu empfangen.

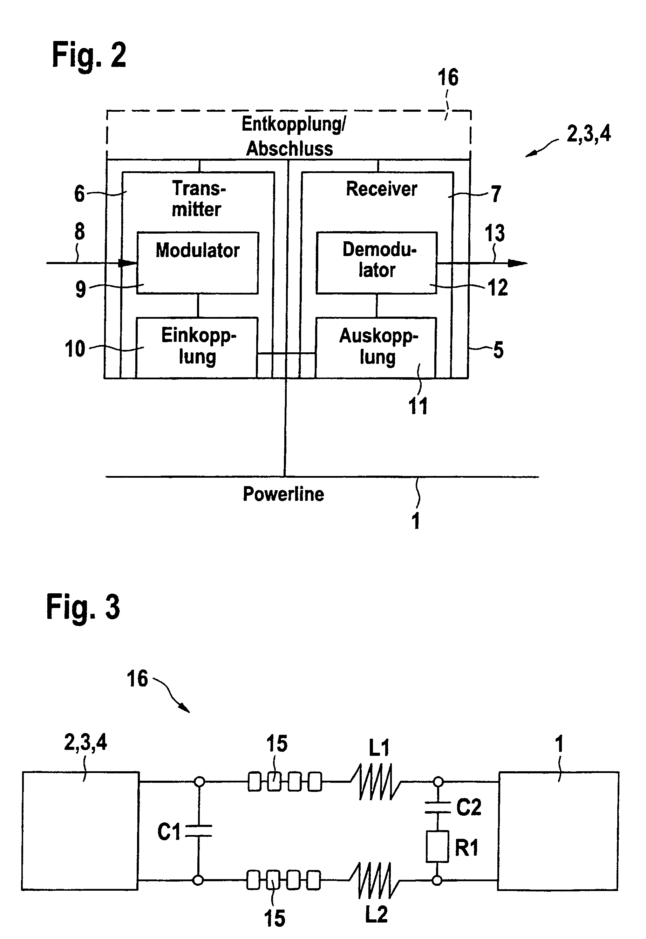

Die Sende-/Empfangseinheit 5 ist in Figur 2 im Ausschnitt dargestellt. Sie umfasst eine Sendeeinheit 6 und eine Empfangseinheit 7. Die Sendeeinheit 6 erhält von der Komponente 2, 3, 4 Informationen, die über die Versorgungsleitungsstruktur 1 übertragen werden sollen. Die Informationen stellen bspw. in der Komponenten 2, 3, 4 durch Sensoren 8 aufgenommene Betriebsgrößen des Kraftfahrzeugs dar. Die Informationsübertragung erfolgt mit Hilfe eines oder mehrerer Trägersignale, d.h. die zu übertragenden Informationen werden dem oder jedem Träger aufmoduliert. Dazu werden die Informationen von den Sensoren 8 einem Modulator 9 zugeführt.

In dem Modulator 9 wird das Informationssignal in einer Weise auf das Trägersignal aufmoduliert, die dem gewünschten Übertragungsverfahren entspricht. Als Übertragungsverfahren kommen Einzelträgerverfahren (Single Carrier) mit schmalbandiger Modulation, Bandspreizverfahren oder Mehrträgerverfahren (Multi Carrier) zum Einsatz. Einzelträgerverfahren sind bspw. ASK (Amplitude Shift Keying), FSK (Frequency Shift Keying), PSK (Phase Shift Keying) in verschiedenen Varianten, wie bspw. BPSK, QPSK, DBPSK, DQPSK, oder QAM (Quadrature Amplitude Modulation). Als Bandspreizverfahren sind bspw. DSSS (Direct Sequence Spread Spectrum) oder FH (Frequency Hopping) denkbar.

Mehrträgerverfahren sind bspw. OFDM (Orthogonal Frequency Divsion Multiplexing) mit individueller Trägermodulation. Bei der Wahl des Übertragungsverfahrens ist auf Resistenz gegenüber vorhandenen Störern und auf eine effiziente Nutzung der für die Kommunikation zur Verfügung stehenden Bandbreite zu achten.

Das Trägersignal mit dem aufmodulierten Informationssignal wird einer Einkoppelvorrichtung 10 zugeführt, die dieses Signal in die Versorgungsleitungsstruktur 1 einkoppelt. Danach wird das modulierte Signal über die Versorgungsleitungsstruktur 1 übertragen. Für die Informationsübertragung wird vorzugsweise ein Frequenzbereich zwischen 100 MHz und 300 MHz gewählt. Darüber hinaus kann auch beliebig andere Frequenzbereiche, bspw. zwischen 1 MHz und 10 MHz bzw. 20 MHz, genutzt werden.

In einer empfangenden Komponente 2, 3, 4 wird das modulierte Signal zunächst aus der Versorgungsleitungsstruktur 1 ausgekoppelt. Dazu ist eine Auskoppelvorrichtung 11 in der Empfangseinheit 7 der Sende-/ Empfangseinheit 5 einer Komponente 2, 3, 4 vorgesehen. Das ausgekoppelte Signal wird an einen Demodulator 12 geführt, in dem die Demodulation des empfangenen Signals und damit die Rückgewinnung der übertragenen Informationen stattfindet. Die empfangenen Informationen werden bspw. an Aktoren 13 in der empfangenden Komponente 2, 3, 4 zur Variation bestimmter Betriebsgrößen oder Kraftfahrzeugfunktionen weitergeleitet.

Ein Trägersignal kann z.B. die Form

$$u(t) = A(t) \cdot \cos[2\pi f(t) \cdot t + \varphi(t)]$$

aufweisen. Das Informationssignal selbst hat bspw. die Form:

$$s(t) = \sum_{i=-\infty}^{\infty} b_i \cdot rect\left(\frac{t - i \cdot T_b}{T_b}\right)$$

Dabei repräsentiert $b_i$ den zu übertragenden Informationsvektor. $T_b$ ist die Bitdauer eines einzelnen Datenbits.

Abhängig von dem Informationssignal s(t) kann einer oder können mehrere Parameter der Trägerschwingung variiert werden. Die in Frage kommenden Parameter sind dabei die Amplitude A(t), die Frequenz f(t) und die Phase φ(t). Je nach Art der von dem Informationssignal s(t) beeinflussten Parameter ergeben sich die oben bereits genannten verschiedenen Übertragungsverfahren.

Auf Grund der Informationsübertragung bei hohen Frequenzen sind verschiedene Modifikationen an der Versorgungsleitungsstruktur 1 und den daran angeschlossenen Komponenten 2, 3, 4 des Kraftfahrzeugs durchzuführen. Dies ist u.a. eine hochfrequente Entkopplung aller Komponenten 2, 3, 4 des Kraftfahrzeugs von der Versorgungsleitungsstruktur 1 und Anpassung der Komponenten 2, 3, 4 zur Informationsübertragung an den Wellenwiderstand der Versorgungsleitungsstruktur 1.

Um unerwünschte und nicht voraussehbare Effekte auf Grund der Hochfrequenz zu vermeiden, werden alle Komponenten 2, 3, 4 hochfrequent entkoppelt. Dies bedeutet, dass die Hochfrequenz nicht in die Komponenten 2, 3, 4 eindringen darf. Dies kann z.B. mit seriell in die Versorgungsleitungen eingefügten Hochfrequenz (HF)-Drosseln erfolgen, auf die zur Komponentenseite hin ein parallel geschalteter Kondensator C1 (hochfrequenter Kurzschluss) folgt. Eine entsprechende Anpassschaltung 16 zur Realisierung dieser hochfrequenten Entkopplung ist in Figur 3 dargestellt.

Reflexionen, welche auf den Versorgungsleitungen durch Sprünge des Wellenwiderstands (Stoßstellen) oder Fehlanpassung an den Leitungsenden entstehen, sind für eine schnelle Informationsübertragung störend, da durch sie eine lange Kanalimpulsantwort entsteht. Aus diesem Grund wird jede Kraftfahrzeugkomponente 2, 3, 4 nach Möglichkeit hochfrequenzmäßig von der Versorgungsleitungsstruktur 1 abgekoppelt, so dass die Komponenten 2, 3, 4 zur Datenübertragung an den Wellenwiderstand der Versorgungsleitungsstruktur 1 angepasst werden können. Die Anpassschaltung 16 besteht aus zwei Spulen L1, L2 und aus mehreren Ferritperlen 15, die konzentrisch auf die Versorgungsleitung geschoben werden.

Die Impedanz eines gemäß Figur 3 mit Ferritperlen 15 versehenen Versorgungsleitungsstücks erweist sich bei hohen Frequenzen f>100 MHz als unabhängig von der Frequenz f. Jedoch hängt die Impedanz über die folgende exponentielle Kennlinie von der Strombelastung ab:

$$Z(I) = Z_0 \cdot e^{\frac{I}{I_0}}$$

Durch die dargestellte Anpassung mit dem Widerstand R1 (Wellenwiderstand der Versorgungsleitung) werden Reflexionen an den Verbindungsstellen zwischen der Versorgungsleitungsstruktur 1 und den Fahrzeugkomponenten 2, 3, 4 vermieden. Die Anpassschaltung 16 aus Figur 3 hat bei Gleichstrom einen sehr kleinen Durchgangswiderstand, um zusätzliche Verluste bei der Energieübertragung an den Komponenten 2, 3, 4 zu vermeiden. Bei Frequenzen im Arbeitsbereich der Powerline Communications wird jedoch eine hohe Durchgangsimpedanz erreicht, die nach Möglichkeit ein Mehrfaches des Wellenwiderstandes der Versorgungsleitungen beträgt.

Als weitere Maßnahmen zur Verbesserung des hochfrequenten Übertragungsverhaltens der Versorgungsleitungsstruktur, wird des Weiteren vorgeschlagen, die Versorgungsleitungsstruktur 1 zu modifizieren. Neben den Komponenten 2, 3, 4 führen Wellenwiderstandssprünge innerhalb der Versorgungsleitungen, die von Leitungsabzweigungen her rühren, zu Reflexionen. Für die Neugestaltung der Versorgungsleitungsstruktur 1 bieten sich folgende Konzepte an:

- H-Struktur: Der Querschnitt des Hauptstrangs ist an die zu übertragende Leistung angepasst. Dies bedeutet, dass der Querschnitt beginnend bei der Energiequelle 14 (Kraftfahrzeugbatterie) am größten ist und sich entsprechend der Anzahl der noch zu versorgenden Komponenten 2, 3, 4 mit wachsender Länge verringert. Dies würde eine zusätzliche Einsparung an Leitermaterial (bspw. Kupfer) mit sich bringen.

- Ring-Struktur: Der Leiterquerschnitt wird entsprechend der H-Struktur ausgebildet. Hierbei ist es im Hinblick auf das Hochfrequenzverhalten wichtig, durch Gestaltung der Leitergeometrie trotz Querschnittsveränderung den Wellenwiderstand konstant zu halten. Insgesamt wird die effektive Leitungslänge um etwa den Faktor 2 höher liegen als bei der H-Struktur.

- Stern-Struktur: Der Hauptstrang weist einen konstanten Querschnitt auf. Die einzelnen Zuleitungen zu den Komponenten 2, 3, 4 sind nach dem jeweiligen Energiebedarf der Komponenten 2, 3, 4 bemessen.

Ein weiterer wichtiger Gesichtspunkt bei der Verringerung der Störanfälligkeit der Informationsübertragung über die Versorgungsleitungsstruktur 1 ist die Gestaltung der "Rückleitung". Bisher wird die Karosserie eines Kraftfahrzeugs als allgemeine elektrische Masse verwendet, was verschiedene unerwünschte Effekte im hochfrequenten Bereich, bspw. Funkabstrahlung, Übersprechen und Reflexionen, mit sich bringt. Für eine zuverlässige Übertragung hochfrequenter Signale ist die Verwendung einer Karosseriemasse deshalb grundsätzlich nicht mehr geeignet. Aus diesem grund werden gesonderte, von der Fahrzeugkarosserie elektrisch getrennte Versorgungsleitungen als Rückleitungen von den Komponenten 2, 3, 4 zu mindestens einer Energiequelle 14 des Kraftfahrzeugs vorgeschlagen.

Für die Versorgungsleitungsstruktur mit gesonderter Rückleitung bieten sie die folgenden Konzepte an:

- Aufbau der Versorgungsleitungsstruktur 1 als Koaxialleitungsstruktur: Koaxialleitungen zeichnen sich durch ihre gute Abschirmwirkung aus. Der Energietransport - egal bei welcher Frequenz - findet im Inneren der Struktur statt, so dass keine elektromagnetischen Felder austreten können. Die Koaxialstruktur erfordert einen ausreichend großen Querschnitt des Innenleiters, um Ströme von über 25 Ampere transportieren zu können.

- Aufbau der Versorgungsleitungsstruktur 1 mit verdrillten Doppeladern.

Als Zugriffsverfahren für die Informationsübertragung bieten sich die folgenden Mehrfachzugriffsverfahren an:

- TDMA (Time Division Multiple Access)

- FDMA (Frequency Division Multiple Access)
- CDMA (Code Division Multiple Access)

Bei diesen Verfahren werden die einzelnen Kommunikationspartner (Komponenten 2, 3, 4) entweder im Zeit- bzw. Frequenzbereich oder durch Verwendung verschiedener (orthogonaler) Codes separiert.

**Patentansprüche**

1. Versorgungsleitungsstruktur (1) zur Energieversorgung von elektrischen Komponenten (2, 3, 4) eines Kraftfahrzeugs und zur Übertragung von Informationen zwischen zumindest einem Teil der Komponenten (2, 3, 4), wobei die Versorgungsleitungsstruktur (1) gesonderte, von der Fahrzeugkarosserie elektrisch getrennte Versorgungsleitungen als Rückleitungen von den Komponenten (2, 3, 4) zu mindestens einer Energiequelle (14) des Kraftfahrzeugs aufweist, wobei

   - Sende-/Empfangseinheiten (5) in den Komponenten (2, 3, 4) vorgesehen sind, wobei die Impedanz der Sende-/ Empfangseinheiten (5) der Komponenten (2, 3, 4) an den Wellenwiderstand der jeweils an die Komponente (2, 3, 4) heranführenden Versorgungsleitungen angepasst ist;
   - alle Komponenten (2, 3, 4) von der Versorgungsleitungsstruktur (1) hochfrequent entkoppelt sind; und
   - in den Verbindungsleitungen Hochfrequenz-Drosseln (L1, L2, 15) seriell angeordnet sind und zu den Komponenten (2, 3, 4) hin in den Verbindungsleitungen mindestens ein Kondensator (C1) parallel geschaltet ist.

2. Versorgungsleitungsstruktur (1) nach Anspruch 1, **dadurch gekennzeichnet, dass** die Versorgungsleitungen der Versorgungsleitungsstruktur (1) als Koaxialleitungen oder als verdrillte Doppeladern ausgebildet sind.

3. Versorgungsleitungsstruktur (1) nach Anspruch 1 oder 2, **dadurch gekennzeichnet, dass** zwischen die Komponenten (2, 3, 4) und die Versorgungsleitungsstruktur (1) eine Anpassschaltung (16) eingefügt ist, durch welche die Impedanz der Sende-/ Empfangseinheiten (5) der Komponenten (2, 3, 4) an den Wellenwiderstand der jeweils an die Komponente (2, 3, 4) heranführenden Versorgungsleitungen angepasst ist.

4. Versorgungsleitungsstruktur (1) nach einem der Ansprüche 1 bis 3, **dadurch gekennzeichnet, dass** die Versorgungsleitungen in einer H-Struktur, einer Ring-Struktur oder einer Stern-Struktur angeordnet sind.

**Claims**

1. Supply line structure (1) for supplying power to electrical components (2, 3, 4) of a motor vehicle and for transmitting information between at least some of the components (2, 3, 4), with the supply line structure (1) having separate supply lines which are electrically isolated from the vehicle body as return lines from the components (2, 3, 4) to at least one energy source (14) of the motor vehicle, with

   - transceiver units (5) being provided in the components (2, 3 ,4), the impedance of the transceiver units (5) of the components (2, 3, 4) being matched to the characteristic wave impedance of the supply lines which respectively lead to the component (2, 3, 4);
   - all of the components (2, 3, 4) being decoupled from the supply line structure (1) at radio frequency; and
   - radio-frequency inductors (L1, L2, 15) being arranged in series in the connecting lines and at least one capacitor (C1) being connected in parallel with the components (2, 3, 4) in the connecting lines.

2. Supply line structure (1) according to Claim 1, **characterized in that** the supply lines of the supply line structure (1) are in the form of coaxial lines or twisted pairs of wires.

3. Supply line structure (1) according to Claim 1 or 2, **characterized in that** a matching circuit (16) is inserted between the components (2, 3, 4) and the supply line structure (1), by means of which matching circuit the impedance of the transceiver units (5) of the components (2, 3, 4) is matched to the characteristic wave impedance of the supply lines which respectively lead to the component (2, 3, 4).

4. Supply line structure (1) according to one of Claims 1 to 3, **characterized in that** the supply lines are arranged in an H structure, a ring structure or a star structure.

**Revendications**

1. Structure de ligne d'alimentation (1) pour l'alimentation en énergie de composants électriques (2, 3, 4) d'un véhicule automobile et pour l'échange d'information entre au moins une partie des composants (2, 3, 4),

   la structure de ligne d'alimentation (1) ayant des lignes d'alimentation électriquement distinctes de la carrosserie du véhicule comme ligne de retour des composants (2, 3, 4) vers au moins une source d'énergie (14) du véhicule, dans laquelle

   - les composants (2, 3, 4) comportent des unités émission/réception (5), l'impédance de ces unités émission/réception (5) des composants (2, 3, 4) étant adaptée à l'impédance caractéristique des lignes d'alimentation reliées respectivement aux composants (2, 3, 4),
   - tous les composants (2, 3, 4) sont découplés en haute fréquence de la structure de ligne d'alimentation (1), et
   - les lignes de liaison comportent en série des bobines haute fréquence (L1, L2, L5), et pour les composants (2, 3, 4) il y a au moins un condensateur (C1) en parallèle dans les lignes de liaisons.

2. Structure de ligne d'alimentation (1) selon la revendication 1,
   **caractérisée en ce que**
   les lignes d'alimentation de la structure de ligne d'alimentation (1) sont réalisée sous la forme de ligne coaxiale ou de ligne à double brins torsadés.

3. Structure de ligne d'alimentation (1) selon la revendication 1 ou 2,
   **caractérisée en ce qu'**
   entre les composants (2, 3, 4) et la structure de lignes d'alimentation (1), un circuit adaptateur (16) adapte l'impédance des unités émission/réception (5) des composants (2, 3, 4) l'impédance caractéristique de chacune des lignes d'alimentation reliées aux composants (2, 3, 4).

4. Structure de ligne d'alimentation (1) selon l'une des revendications 1 à 3,
   **caractérisée en ce que**
   les lignes d'alimentation ont une structure en H, structure en anneau ou une structure en étoile.

**Fig. 1**

EP 1 289 164 B1

## Fig. 2

## Fig. 3